(19) Europäisches Patentamt
European Patent Office
Office européen des brevets

(11) EP 0 546 624 B1

(12) **FASCICULE DE BREVET EUROPEEN**

(45) Date de publication et mention de la délivrance du brevet:
**19.11.1997 Bulletin 1997/47**

(51) Int Cl.[6]: **G06F 15/80**

(21) Numéro de dépôt: **92203774.2**

(22) Date de dépôt: **04.12.1992**

(54) **Système de traitement de données opérant avec une fonction non linéaire formée de morceaux**

Datenverarbeitungssystem mit geteilter nicht-linearer Funktion

Data processing system operating with non-linear function divided into pieces

(84) Etats contractants désignés:
**DE FR GB**

(30) Priorité: **11.12.1991 FR 9115373**

(43) Date de publication de la demande:
**16.06.1993 Bulletin 1993/24**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeur: **Deville, Yannick**
**F-75008 Paris (FR)**

(74) Mandataire: **Chaffraix, Jean et al**
**Société Civile S.P.I.D.**
**156, Boulevard Haussmann**
**75008 Paris (FR)**

(56) Documents cités:
**GB-A- 2 236 608**

- **1991 IEEE INTERNATIONAL SYMPOSIUM ON CIRCUITS AND SYSTEMS vol. 3, 11 Juin 1991, SINGAPORE pages 1505 - 1508 ALIPPI 'Simple approximation of sigmoidal functions : Realistic design of digital neural networks capable of learning'**
- **ELECTRONICS LETTERS. vol. 27, no. 12, 6 Juin 1991, ENAGE GB pages 1037 - 1038 SAMMUT 'Implementing nonlinear activation functions in neural network emulators'**
- **1990 IEEE INTERNATIONAL SOLID-STATE CIRCUITS CONFERENCE 15 Février 1990, SAN FRANCISCO, USA pages 142 - 143 MORISHITA 'A BiCMOS analog neural network with dynamically updated weights'**

EP 0 546 624 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un système de traitement de données comprenant des moyens pour transformer un signal d'entrée en un signal de sortie à l'aide d'une fonction non linéaire formée de morceaux. Un tel système trouve son application dans les problèmes de classification, en particulier pour la reconnaissance de forme, de caractères, pour le traitement du signal, notamment de la parole, pour le traitement d'images, pour la compression de l'information, pour le contrôle non linéaire ou autres. Il peut s'agir, par exemple, de réseaux de neurones ou de contrôleurs non linéaires. La description qui va suivre sera principalement développée pour les réseaux de neurones sans que cela constitue une limitation.

Des informations concernant différents types de réseaux de neurones peuvent être trouvées, par exemple dans l'article de R.P. LIPMANN "An introduction to computing with neural nets", IEEE ASSP Magazine, April 1987, pages 4 à 22.

Pour effectuer un traitement, un réseau de neurones doit au préalable apprendre à l'effectuer au cours d'étapes d'apprentissage, puis au cours d'étapes de résolution il met en oeuvre la méthode apprise.

Pour un neurone donné le traitement consiste à totaliser l'ensemble des contributions fournies par les neurones qui lui sont connectés en amont. Il délivre alors un potentiel neuronal POT. En sortie, il peut y avoir un ou plusieurs neurones appelés alors neurones de sortie. Les potentiels neuronaux POT des neurones doivent généralement être soumis à une action d'une fonction d'activation non linéaire NLF pour que le processeur puisse opérer correctement des décisions. Cette fonction d'activation NLF doit répondre à certains critères, les plus importants étant qu'elle sature lorsque la variable croît en valeur absolue et qu'elle soit dérivable en tout point.

Plusieurs fonctions sont utilisées couramment dans les processeurs neuronaux connus. Celles qui sont les plus répandues sont les fonctions sigmoïdes car elles permettent d'obtenir des résultats optimaux en particulier sur la vitesse de convergence au cours des étapes d'apprentissage par l'exemple nécessaires pour adapter le processeur neuronal à l'application désirée.

Pour soumettre les potentiels neuronaux POT à l'action de la fonction d'activation non linéaire NLF, différentes méthodes sont actuellement connues. Elles utilisent un traitement soit interne soit externe au processeur. Le traitement externe peut être effectué à l'aide d'un calculateur ou par lecture de tables précalculées. La précision de calcul des coefficients synaptiques (en phase d'apprentissage) ou des états neuronaux (en phase de résolution) dépend en définitive du pas de calcul mis en oeuvre soit dans le calculateur soit dans les tables précalculées. Il apparaît donc des limites de taille notamment pour les tables précalculées ou de durée de calcul pour les calculateurs.

D'autre part, une reconfiguration des tables pour opérer avec d'autres fonctions d'activation s'avère être un processus lent. Il n'est pas possible non plus de faire varier aisément le paramètre T dit de "température" qui caractérise une fonction d'activation en transformant une fonction F(x) en fonction F(x/T). De même, le calcul d'une fonction d'activation et de sa dérivée forment deux actions distinctes.

Par ailleurs, tout traitement externe nécessite d'extraire du processeur neuronal des données numériques initiales (potentiels neuronaux POT) puis de réintroduire dans le processeur neuronal des données numériques traitées (états neuronaux STAT). Ces opérations de transfert nécessitent à la fois du temps de traitement et un matériel spécifique qu'il est souvent souhaitable d'éliminer pour des réalisations sous forme de circuit intégré.

On a donc cherché à intégrer directement dans le processeur neuronal les moyens de calcul permettant d'appliquer la fonction d'activation non linéaire choisie. Si l'on désire affecter un matériel réduit à l'implémentation de la fonction non linéaire, on est alors limité à ne mettre en oeuvre que des fonctions non linéaires simples. Elles sont vite insuffisantes pour des applications courantes.

Comme il n'est pas raisonnablement envisageable d'effectuer le calcul d'une fonction sigmoïde avec un pas suffisamment fin, on s'est alors orienté vers l'approximation de la fonction sigmoïde par une fonction linéaire par morceaux. Ainsi on connaît le document GB 2 236 608 A qui décrit un réseau de neurones numérique qui comprend des moyens pour calculer une fonction non linéaire d'approximation formée par une fonction linéaire par morceaux. Le principe consiste à mettre en oeuvre une loi de compression de type A utilisée en modulation à codage par impulsions.

Mais comme l'indique ce document, l'approximation ainsi obtenue reste imparfaite et cela peut entraîner des erreurs de fonctionnement du processeur neuronal. Il est donc souhaitable de disposer d'une approximation beaucoup plus rigoureuse de la fonction sigmoïde. Il peut être également souhaitable que l'implémentation faite de la fonction non linéaire d'approximation puisse aisément être reprogrammée pour approximer d'autres fonctions que les fonctions sigmoïdes. Cette mise à jour doit pouvoir être effectuée rapidement. La température de la fonction non linéaire doit ainsi pouvoir être modifiée très rapidement.

D'autre part, au cours de phases d'apprentissage, il est possible de mettre en oeuvre des algorithmes d'apprentissage qui nécessitent de mettre en oeuvre un calcul de la dérivée de la fonction non linéaire d'approximation utilisée. Il est donc souhaitable, subsidiairement, que la réalisation matérielle mise en oeuvre puisse à faible coût traiter également ce mode opératoire.

Ainsi pour calculer des résultats de l'action, sur ledit potentiel neuronal POT, de ladite fonction d'activation non

linéaire d'approximation ANLF, il est prévu, selon l'invention un système de traitement de données comme indiqué dans la revendication 1.

Plus particulièrement, les seconds moyens comprennent :

- des moyens pour détecter lorsque les premières combinaisons ont des valeurs ressortissant ou non à ladite partie intermédiaire,
- des moyens pour appliquer, aux premières combinaisons, la partie intermédiaire de l'autre fonction non linéaire lorsque les premières combinaisons ont des valeurs ressortissant à ladite partie intermédiaire, et pour attribuer aux secondes combinaisons des valeurs constantes lorsque les premières combinaisons ont des valeurs ressortissant aux parties extrêmes.

Ainsi avantageusement, il est possible de calculer ladite fonction d'activation par morceaux par une autre fonction non linéaire F(x) qui soit simple, définie dans un intervalle donné et limitée par deux segments constants $-F_{min}$, $F_{max}$. Dans l'intervalle ($-x_{min}$, $x_{max}$) on peut choisir F(x) en relation avec la fonction non linéaire NLF dont on veut obtenir une approximation ANLF. Pour obtenir une approximation d'une sigmoïde, ce segment non constant F(x) peut être par exemple une partie d'une fonction formée d'un polynôme d'ordre 3 ou une fonction rampe. Une transformation selon ce polynôme d'ordre 3 peut être réalisée matériellement à l'aide d'une table qui ne nécessite qu'un nombre très limité de valeurs stockées tout en permettant un calcul de la fonction non linéaire ANLF avec un pas fin.

Une fonction rampe est pour sa part très avantageuse car elle permet de supprimer la table ce qui réduit encore les moyens matériels nécessaires.

Le choix de la fonction qui constitue le segment non constant F(x) n'est pas étroitement lié à la fonction non linéaire NLF dont on veut une approximation. Il est donc possible que le choix de ce segment soit guidé en grande partie par sa facilité d'implémentation. Le nombre et les valeurs des coefficients synaptiques permettent d'obtenir une approximation de la fonction non linéaire NLF avec une précision qui peut être choisie arbitrairement.

L'invention permet de mettre en oeuvre un matériel réduit pour calculer la fonction non linéaire d'approximation ANLF. Il est donc possible de doubler ce matériel réduit pour implementer le calcul de la dérivée de la fonction non linéaire ANLF. On considère ainsi la fonction et sa dérivée comme deux fonctions traitées séparément de la même manière.

L'utilisation de la fonction rampe permet d'effectuer le calcul de la fonction ANLF et sa dérivée sans doubler le matériel nécessaire ce qui est avantageux pour une réalisation matérielle.

Dans le cas où le calcul de la fonction non linéaire ANLF et/ou sa dérivée est obtenu à l'aide de moyens de type neuronal, il est possible de combiner ces moyens avec d'autres moyens neuronaux du processeur neuronal afin de réduire globalement les moyens matériels.

L'invention concerne également les contrôleurs non linéaires qui effectuent une transformation d'un signal d'entrée en un signal de sortie à l'aide d'une fonction non linéaire formée de morceaux.

Le système peut mettre en oeuvre une architecture numérique et/ou une architecture analogique.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma général d'un processeur neuronal connu.

Figure 2 : une partie d'une courbe sigmoïde et de son approximation par une fonction linéaire par morceaux (dans un premier quadrant).

Figure 3 : un schéma général d'un processeur neuronal selon l'invention.

Figure 4 : un schéma plus détaillé de l'autre processeur numérique neuronal selon l'invention.

Figure 5 : différentes allures de courbes F(x) utilisables selon l'invention.

Figure 6 : un schéma dans le cas où l'autre fonction non linéaire est une rampe.

Figure 7 : un schéma pour le calcul de la dérivée de la fonction ANLF dans le cas où l'autre fonction non linéaire est une rampe.

Figure 8 : un schéma pour le calcul de la fonction ANLF et de sa dérivée dans le cas où l'autre fonction non linéaire est une rampe.

Figures 9 à 12 : un exemple de construction d'une fonction non linéaire par morceaux.

La figure 1 est une représentation schématique d'un processeur neuronal 10 connu ayant une unité neuronale 12 qui fournit à un instant donné au moins un potentiel neuronal POT. L'unité neuronale 12 reçoit des données DATA des moyens d'entrée 13 et des coefficients synaptiques $C_{ab}$ des moyens 16 et calcule les potentiels neuronaux tel que :

$$POT_a = \sum_b C_{ab} . V_b$$

Selon la nature des applications techniques mises en oeuvre, l'unité neuronale 12 peut avoir plusieurs neurones pour lesquels, on détermine à un instant donné un potentiel neuronal POT. Si l'on considère une séquence de temps, il apparaît, pour un même neurone, une séquence de potentiels neuronaux POT. Ces potentiels doivent en général être individuellement soumis à l'action d'une fonction d'activation non linéaire NLF. Lorsque le calcul de celle-ci est effectué dans le processeur neuronal, on peut mettre en oeuvre (bloc 14) une fonction d'activation non linéaire ANLF d'approximation de la fonction d'activation non linéaire NLF. Un potentiel neuronal POT est ainsi transformé en un état neuronal STAT qui est, pour une majorité de neurones, réintroduit dans l'unité neuronale 12 au cours du traitement.

Les coefficients synaptiques $C_{ab}$ sont stockés dans une mémoire 16. Ils caractérisent les liaisons qui relient des éléments b à des éléments a. Ceux-ci peuvent être soit des entrées de données DATA des moyens 13 soit des neurones de l'unité neuronale 12.

Au cours d'une phase d'apprentissage, les coefficients synaptiques sont chargés (connexion 15) dans la mémoire 16. Au cours d'une phase de résolution, les coefficients synaptiques sont lus (connexion 17) dans la mémoire 16.

La structure et le fonctionnement d'un tel processeur numérique neuronal sont connus de l'homme du métier.

Une fonction non linéaire ANLF d'approximation d'une sigmoïde NLF est représentée sur la figure 2. A titre d'exemple, on va considérer une fonction NLF impaire pour laquelle on va déterminer une fonction non linéaire ANLF qui soit aussi impaire. Ceci correspond alors à des seuils $T_h$ nuls. Il s'agit d'une approximation par morceaux formée de segments rectilignes entre les abscisses ($x_0$, $x_1$), ($x_1$, $x_2$), ($x_2$, $x_3$)... L'invention propose d'opérer une approximation de ce type à l'aide d'un processeur numérique neuronal 14 représenté sur la figure 3. Il comprend une unité neuronale d'entrée 20, des moyens 22 pour appliquer une autre fonction non linéaire CNLF, une unité neuronale de sortie 24 et des moyens 26 pour stocker des coefficients synaptiques $H_j$ et $D_j$ pour respectivement les unités neuronales 20, 24. L'unité neuronale d'entrée 20 reçoit des données (potentiels neuronaux POT) de l'unité neuronale 12 du processeur neuronal 10. L'unité neuronale de sortie 24 délivre un état neuronal STAT pour chaque potentiel neuronal POT arrivant en entrée. Dans le cas où la fonction NLF n'est pas impaire, les deux unités neuronales 20, 24 peuvent recevoir des seuils $T_h$ affectant chaque neurone de l'unité neuronale pour modifier les seuils d'activation des neurones.

Un schéma détaillé d'un processeur neuronal 14 est représenté sur la figure 4. L'unité neuronale 20 comprend n neurones $30_1$... $30_j$... $30_n$ qui reçoivent chacun leur propre coefficient synaptique $H_1$... $H_j$... $H_n$ et qui reçoivent tous le même potentiel neuronal POT qui doit subir l'action de la fonction non linéaire ANLF. Il y a autant de neurones qu'il y a de morceaux à pente non nulle dans un même quadrant pour la fonction non linéaire ANLF d'approximation. Les n neurones délivrent chacun un potentiel neuronal $M_1$... $M_j$... $M_n$ avec :

$$M_1 = H_1.POT + Th_1$$

------------------

$$M_j = H_j.POT + Th_j$$

------------------

$$M_n = H_n.POT + Th_n$$

où $Th_1$... $Th_j$... sont nuls lorsque la fonction NLF est impaire.

Les n combinaisons $M_n$ peuvent être obtenues soit par une couche de n neurones comme cela vient d'être décrit, soit par plusieurs couches de neurones qui délivrent également n combinaisons. Ces potentiels neuronaux sont alors soumis à l'action de la fonction non linéaire CNLF.

Les moyens 22 d'application de la fonction CNLF sont alors formés d'unités $35_1$..., $35_j$..., $35_n$ appliquant chacun préférentiellement une même fonction CNLF. Une unité $35_n$ est constituée par exemple de deux comparateurs $36_1$, $36_2$ qui détectent lorsque $M_n$ est respectivement supérieur ou égal à $x_{max}$ et inférieur ou égal à $-x_{min}$. Une table 37 est alors adressée soit par les sorties des comparateurs $36_1$, $36_2$ lorsqu'ils sont actifs soit par $M_n$ lorsque les comparateurs ne sont pas actifs. La table est préalablement chargée par les valeurs F(x), $F_{max}$ et $-F_{min}$. Il est possible de n'utiliser qu'une seule unité 35 opérant successivement sur chaque potentiel $M_1$,... $M_j$,... $M_n$.

Des exemples de fonctions non linéaires CNLF sont représentés sur la figure 5. Hors de l'intervalle ($-x_{min}$, $x_{max}$) toutes les fonctions se stabilisent respectivement à $-F_{min}$ et $F_{max}$. Les valeurs $-F_{min}$ et $F_{max}$ peuvent être quelconques mais constantes.

Dans l'intervalle ($-x_{min}$, $x_{max}$), la fonction F(x) peut être formée d'une rampe (courbe F1) ou d'un polynôme d'ordre 3 (courbe F2) ou d'une courbe plus complexe (courbe F3).

Préférentiellement selon l'invention, on utilise une rampe dans l'intervalle ($-x_{min}$, $x_{max}$). Cette fonction a en effet l'avantage de ne nécessiter que peu de moyens matériels. Elle a également un avantage supplémentaire, le calcul associé de sa dérivée ne nécessitant que peu de moyens supplémentaires.

La figure 6 représente un exemple de réalisation d'une unité 35, par exemple de l'unité $35_n$, dans le cas de la rampe pour la voie d'ordre n. Pour simplifier le schéma, les valeurs de $F_{max}$ et $-F_{min}$ sont normalisées respectivement à + 1 et - 1 ainsi que $x_{max}$ et $-x_{min}$.

Le potentiel neuronal $M_n$ entre dans deux comparateurs $36_1$, $36_2$ qui détectent respectivement lorsque $M_n \geq 1$ et $M_n \leq -1$.

Lorsque $M_n \geq 1$, la sortie $61_1$ est activée (état Y). Elle actionne alors un organe 63 qui force une valeur $F_{max} = +1$ sur la sortie $S_n$.

Lorsque $M_n \leq -1$, la sortie $62_1$ est activée (état Y). Elle actionne alors un organe 67 qui force une valeur $F_{min} = -1$ sur la sortie $S_n$.

Lorsque $-1 < M_n < +1$, les sorties $61_2$ et $62_2$ sont activées (état N). Elles entrent dans une porte ET 64 qui agit sur une porte de transfert 65 qui transfère chaque valeur $M_n$ (bus 38) sur la sortie $S_n$. Il y a alors identité entre les potentiels neuronaux $M_n$ et les états $S_n$.

Toutes les unités $35_1$ - $35_n$ de la figure 4 sont identiques entre elles lorsque tous les potentiels $M_j$ sont soumis à l'action de la même fonction F(x). Il est possible de choisir des fonctions F(x) différentes. Tous les états ($S_1$ - $S_n$) arrivent, avec les coefficients synaptiques $D_j$, dans l'unité neuronale 24 (figure 4) qui effectue les calculs :

$$STAT = \sum_{j=1}^{n} D_j . S_j + th$$

L'unité neuronale 24 est formée d'un seul neurone qui n'est pas nécessairement suivi par l'action d'une fonction d'activation.

Les coefficients $H_j$ et $D_j$ stockés dans la mémoire 26 pour être utilisés respectivement dans les unités neuronales 20 et 24 doivent être prédéterminés en fonction du choix des fonctions non linéaires NLF, ANLF et CNLF utilisées et de l'erreur d'approximation tolérée. Dans le cas où CNLF est une rampe, la méthode de calcul est la suivante.

Détermination de la fonction d'activation non linéaire ANLF.

La fonction non linéaire ANLF, ayant pour équation A(x), est une approximation de la fonction non linéaire NLF, ayant pour équation T(x). Il est possible d'utiliser des critères différents pour définir la fonction ANLF :

- un premier critère peut consister à fixer a priori une erreur E qui ne doit pas être dépassée entre les fonctions NLF et ANLF,
- un second critère peut consister à fixer a priori le nombre de segments (donc de potentiels neuronaux $M_j$ délivrés par l'unité neuronale 20) que l'on désire utiliser pour obtenir l'approximation de la fonction NLF.

Selon le premier critère, à partir de l'abscisse $x_o = o$ (Figure 2), on fait passer une droite de pente $p_o$ et on calcule l'abscisse $x_1$ du point où cette droite rencontre la courbe de la fonction NLF en faisant que l'erreur maximale atteigne la valeur E entre le segment de droite et ladite courbe. On répète le calcul à partir du point $x_1$ et ainsi de suite pour toute la courbe de la fonction NLF. Le calcul est arrêté lorsque l'erreur maximale devient inférieure à la valeur E. On dispose ainsi d'une suite de segments de droite définis par leur pente et leurs extrémités. L'équation d'un segment de droite d'ordre k, entre $x_k$ et $x_{k+1}$, est :

$$A_k(x) = p_k . x + q_k$$

avec

$p_k$ : la pente
$q_k$ : l'ordonnée à l'origine.

Du fait que A(x) et T(x) coïncident aux extrémités des segments, on obtient :

$$p_k = \frac{T(x_{k+1}) - T(x_k)}{x_{k+1} - x_k}$$

*pour* $o \leq k \leq n\text{-}1$
avec $p_n = o$ car le dernier segment a une pente nulle
et

$$q_k = T(x_k) - p_k . x_k$$

*avec* $o \leq k \leq n$.
La fonction T(x) est supposée convexe ($x \geq o$) et impaire. Le calcul concerne des valeurs $x \geq o$.

L'erreur $e_k(x)$ entre les deux courbes T(x) et A(x) s'écrit:

$$e_k(x) = T(x) - A(x) = T(x) - p_k . x - q_k$$

Le point $x = x_k^{max}$ où cette erreur $e_k$ est maximale est défini par :
$e'(x) = o$ soit $T'(x_k^{max}) = p_k$

En prenant une fonction tangente hyperbolique pour T(x), on démontre que pour les segments à pente non nulle :

$$e_k^{max} = (1 - p_k)^{1/2} - p_k . Argth\ (1 - p_k)^{1/2} - q_k$$

En procédant successivement sur k croissant, en connaissant $x_k$ et en écrivant que $e_k^{max}$ est égale à E, on obtient pour chaque segment de droite d'ordre k ses paramètres ($x_{k+1}$, $p_k$ et $q_k$).

Selon le second critère, on fixe a priori un nombre de segments. On détermine alors les extrémités des segments pour que les erreurs maximales pour chaque segment, y compris pour le dernier segment, soient rigoureusement égales. La méthode de calcul qui vient d'être décrite pour le premier critère peut être légèrement adaptée pour traiter ce second critère. Cette démarche est à la portée de l'homme du métier.

En fixant a priori soit la valeur E de l'erreur maximale admise soit le nombre de segments formant la fonction ANLF, il est possible de prédéterminer la précision de l'approximation.

Détermination des coefficients synaptiques

Lorsque la fonction non linéaire d'approximation ANLF a été déterminée, il reste à calculer les coefficients synaptiques $H_j$ et $D_j$ avec $1 \leq j \leq n$. Le nombre n de coefficients synaptiques est préférentiellement égal au nombre de segments à pente non nulle constituant la fonction ANLF dans le premier quadrant. En faisant correspondre les extrémités et les pentes des segments avec les coefficients $H_j$ et $D_j$, dans le cas d'une rampe, un jeu de coefficients synaptiques possibles est :

$$H_j = \frac{1}{x_j} \text{ et } D_j = x_j . (p_{j-1} - p_j) \text{ pour } 1 \leq j \leq n$$

En effet, pour un segment d'ordre k, on peut écrire :

$$p_k = \sum_{j=k+1}^{n} H_j . D_j = \sum_{j=k+1}^{n} D_j \ / \ x_j$$

d'où on déduit :

$$p_{k-1} - p_k = D_k / x_k$$

A titre d'exemple dans le cas d'une approximation d'une fonction tangente hyperbolique par 15 segments de droite avec une fonction non linéaire CNLF formée d'une rampe, on a calculé les coefficients synaptiques $H_j$ et $D_j$ suivants pour une précision à 10 chiffres significatifs :

| | |
|---|---|
| 4.3929571045 | 0.0159760715 |
| 2.6589252743 | 0.0322265504 |
| 1.9717449409 | 0.0470095161 |
| 1.5822224274 | 0.0601030128 |
| 1.3228327984 | 0.0713172192 |
| 1.1330240705 | 0.0804814564 |
| 0.9850512198 | 0.0874314814 |
| 0.8641723738 | 0.0919985643 |
| 0.7616709701 | 0.0939971737 |
| 0.6719071388 | 0.0932077850 |
| 0.5908705654 | 0.0893488436 |
| 0.5153201275 | 0.0820245505 |
| 0.4420296760 | 0.0706120016 |
| 0.3664545441 | 0.0539566949 |
| 0.2772707979 | 0.0288365201 |
| TABLE 1 - | TABLE 2 - |

La Table 1 représente les coefficients synaptiques $H_j$ et la Table 2 représente les coefficients synaptiques $D_j$.

La méthode décrite précédemment est faite pour le cas où la fonction CNLF comprend une rampe. La méthode s'applique par analogie au cas où la fonction CNLF comprend non pas une rampe mais des parties de fonction plus complexes.

Détermination de la dérivée de la fonction ANLF.

Lors de l'utilisation du processeur neuronal 10, il peut être nécessaire de mettre en oeuvre des algorithmes d'apprentissage qui nécessitent de disposer de la dérivée de la fonction ANLF.

Une première solution consiste alors à considérer cette dérivée comme une fonction nouvelle et à opérer son approximation comme cela vient d'être décrit jusqu'alors.

Une deuxième solution consiste à mettre à profit la mise en oeuvre utilisée pour la fonction ANLF afin de ne pas dupliquer inutilement certains moyens matériels et aussi de pas calculer une approximation de la dérivée de la fonction ANLF mais au contraire la dérivée première exacte de la fonction ANLF. La rampe constitue un cas particulièrement intéressant.

Il a été décrit précédemment que :

$$STAT\ (POT) = \sum_{j=1}^{n} D_j . S_j = \sum_{j=1}^{n} D_j . R\ (H_j . POT) \quad (1)$$

où R(.) est la fonction rampe.

La dérivée de la fonction ANLF revient à calculer la dérivée de STAT, c'est-à-dire :

$$STAT'(POT) = \Sigma\ D_j\ H_j . R'\ (H_j . POT) \qquad (2)$$

La dérivée de la fonction rampe R s'écrit :

- lorsque $POT \leq -1$ ou $POT \geq 1$ alors $R'(.) = 0$
- et lorsque $-1 < POT < 1$ alors $R'(.) = 1$.

En comparant les équations (1) et (2) précédentes, on constate alors que la différence entre les calculs de STAT(POT) et STAT'(POT) consiste à passer de la fonction rampe R à la fonction $H_j.R'$.

Le calcul de la dérivée peut donc être réalisé par une structure identique à celle de la figure 4, hormis les blocs 35 qui sont alors représentés sur la figure 7. Les potentiels neuronaux $M_j$, $1 \leq j \leq n$, entrent dans les comparateurs $36_1$, $36_2$ qui détectent lorsque $M_j \geq 1$ et lorsque $M_j \leq -1$. Les sorties $61_2$ et $62_2$ sont activées lorsque $-1 < M_j < 1$. Ces sorties $61_2$, $62_2$ entrent dans la porte ET 64 qui active une porte de transfert 70 qui transfère le coefficient synaptique $H_j$ correspondant au potentiel $M_j$ d'indice j.

Lorsque la condition $-1 < M_j < 1$ n'est pas vérifiée, la porte ET 64 active un inverseur 72 qui commande un élément 71 qui force un signal nul sur la sortie $S_j$.

Les schémas des figures 6 et 7 peuvent être combinés (figure 8) pour être utilisés successivement soit pour le calcul de la fonction ANLF soit pour le calcul de sa dérivée. Pour cela, un signal de fonction FUNCT permet de sélectionner l'un ou l'autre mode.

Lorsque le signal FUNCT est activé, il active des portes ET 80, 82, 84 qui commandent les blocs 63, 65, 67 précédemment décrits.

Un signal FUNCT pas activé constitue alors une commande pour le calcul de la dérivée. Ce signal passe dans un inverseur 85 qui active des portes ET 81, 83 qui commandent les blocs 70, 71 précédemment décrits.

On dispose ainsi d'un bloc 35 compact qui permet de calculer soit la fonction ANLF soit la dérivée première exacte de la fonction ANLF. L'approximation faite de la fonction NLF par la fonction ANLF peut être obtenue avec une précision prédéterminée aussi grande que cela est désiré.

Il est possible de calculer la fonction dérivée selon une variante. Comme cela vient d'être décrit, la porte de transfert 70 (figures 7 et 8) sert à propager les valeurs des coefficients $H_j$. Il est possible d'obtenir un résultat identique en mettant l'entrée de la porte 70 à une valeur 1 et en multipliant les états $S_j$ par les coefficients synaptiques $D_j$ et par les coefficients synaptiques $H_j$ (à j constant). Ceci est par exemple obtenu en stockant des coefficients synaptiques $D_j.H_j$ dans la mémoire 26 (figure 3). Ainsi avantageusement l'architecture des blocs 22 n'est pas modifiée pour passer du calcul de la fonction F, avec les coefficients synaptiques $H_j$ et $D_j$, au calcul de sa dérivée F', avec les coefficients synaptiques $H_j$ et $D_j.H_j$.

L'autre processeur neuronal 14 représenté sur la figure 4 peut être formé de moyens matériels indépendants des autres moyens du processeur neuronal 10 (figure 1). Néanmoins, une solution avantageuse consiste à réaliser l'autre processeur neuronal 14 à partir de l'unité neuronale 12 et de la mémoire 16 du processeur neuronal 10. En effet, le calcul des potentiels neuronaux POT puis celui de l'application de la fonction d'activation forment des opérations séparées dans le temps. Des neurones de l'unité neuronale 12 peuvent donc dans un premier temps être affectés au calcul des potentiels neuronaux POT puis peuvent ensuite être affectés au calcul des états neuronaux STAT par application de la fonction non linéaire ANLF.

La construction d'une fonction non linéaire G, d'un degré élevé de complexité à partir de fonctions de base S d'un degré de complexité plus faible, est indiquée sur les figures 9 à 12 à titre d'exemple.

Dans cet exemple, la fonction non linéaire G est supposée être une fonction non linéaire par morceaux consistant en une pluralité de segments de droite. La fonction G est de plus supposée être une approximation d'une fonction sigmoïde impaire habituellement mise en oeuvre dans le fonctionnement des réseaux de neurones. La fonction non linéaire G agit sur le potentiel neuronal POT. Le diagramme de la figure 9 illustre la partie positive de G, montrant qu'elle renferme quatre portions linéaires avec des cassures en A, B et C.

Il est de plus considéré que les fonctions de base S suivantes sont disponibles :

$$\text{(I)} \quad \begin{array}{lll} S(y) = -1, & \text{pour} & y < -1 \,; \\ S(y) = y, & \text{pour} & -1 \leq y \leq 1 \,; \\ S(y) = 1, & \text{pour} & y > 1, \end{array}$$

comme cela est indiqué sur le diagramme de la figure 10.

Premièrement, on crée trois fonctions linéaires $M_j$, $1 \leq j \leq 3$ opérant sur POT.

$$\text{(II)} \qquad M_j = H_j \, POT, \; 1 \leq j \leq 3.$$

Ceci est indiqué sur le diagramme de la figure 11. Les coefficients $H_j$ sont constants et prédéterminés comme cela sera indiqué ci-après.

Deuxièmement, la fonction de base S agit sur chaque $M_j$ pour produire un $S_j$, toujours en fonction de POT :

$$\text{(III)} \qquad S_j = S(M_j),\ 1 \le j \le 3$$

comme cela est indiqué sur le diagramme de la figure 12. Ces trois $S_j$ doivent être convenablement combinés pour donner la fonction non linéaire G de la figure 9. Pour cela, dans l'équation (IV) suivante les facteurs $D_1$, $D_2$ et $D_3$ doivent être choisis tels que soit vérifié :

$$\text{(IV)} \qquad D_1.S_1(POT) + D_2.S_2(POT) + D_3.S_3(POT) = G(POT).$$

Comme $H_1 > H_2 > H_3$, on peut déduire les caractéristiques suivantes. Au-delà de $POT = 1/H_j$, la fonction de base S reste égale à l'unité. En d'autres mots, la contribution de $S_j$ à G(POT) au-delà de cette valeur de POT, reste constante. Au-delà de $POT = 1/H_3$, les contributions de $S_j$ sont constantes. Pour $1/H_2 \le POT \le 1/H_3$, les contributions de $S_1$ et $S_2$ sont constantes, tandis que $S_3$ fournit à G une contribution variant linéairement. Pour $1/H_1 \le POT \le 1/H_2$, les contributions de $S_2$ et $S_3$ varient linéairement, et $S_1$ est constant. Pour $0 \le POT \le 1/H_1$, les contributions de $S_1$, $S_2$ et $S_3$ varient linéairement.

En conséquence, on obtient les équations suivantes :

$$C : G(1/H_3) = D_1 + D_2 + D_3$$

$$B : G(1/H_2) = D_1 + D_2 + D_3 \{ H_3/H_2 \}$$

$$A : G(1/H_1) = D_1 + D_2 \{ H_3/H_1 \} + D_3 \{ H_3/H_1 \}$$

Comme les $1/H_j$ sont associés aux valeurs de POT où apparaissent les cassures (A, B et C), les $D_j$ peuvent être aisément déterminés à partir de ce jeu de trois équations linéaires à trois inconnues.

Ce qui vient d'être indiqué est qu'une combinaison convenable de fonctions de bases $S_j$ d'un faible degré de complexité peuvent être utilisées pour créer une fonction non linéaire prédéterminée ayant un degré de complexité plus élevé.

La conséquence pratique est que les fonctions M et S peuvent aisément être implémentées en utilisant une très simple architecture de réseau de neurones de façon à fournir une possibilité de calcul de fonction non linéaire plus compliquée mise en oeuvre dans un réseau de neurones.

Notons que la construction présentée d'une fonction non linéaire d'un degré élevé de complexité n'est pas limitée aux réseaux de neurones, mais peut également être appliquée au domaine des contrôleurs non linéaires qui utilisent des fonctions de transfert non linéaires comme opérations prépondérantes dans le chemin de données. A cette fin, le contrôleur non linéaire peut comprendre lui-même un réseau de neurones simple.

## Revendications

1. Système de traitement de données comprenant des moyens (14) pour calculer à partir d'un signal d'entrée représentant des potentiels neuronaux (POT) qui doivent être soumis à l'action d'une fonction non-linéaire complexe (NLF) en un signal de sortie représentant un état neuronal (STAT) à l'aide d'une fonction non linéaire d'approximation (ANLF) de ladite fonction non-linéaire (NLF) formée de morceaux ou segments, caractérisé en ce que lesdits moyens pour transformer comprennent:

   - des premiers moyens (20) comprennant une unité neuronale pour calculer des premières combinaisons ($M_1$-$M_n$) dudit signal d'entrée avec des premiers coefficients synaptiques ($H_j$),
   - des seconds moyens (22) pour appliquer aux premières combinaisons ($M_1$-$M_n$) au moins une autre fonction non linéaire (CNLF) comprenant une partie intermédiaire non constante F(x) et des parties extrêmes ($F_{max,}$-$F_{min}$) constantes et pour délivrer des secondes combinaisons ($S_1$-$S_N$),
   - des troisièmes moyens (24) comprennant une unité neuronale pour calculer chaque morceau en combinant linéairement les secondes combinaisons ($S_1$-$S_N$) à l'aide de seconds coefficients synaptiques ($D_j$) et pour délivrer le signal de sortie

$$(STAT = \sum^{n} D_j S_j + th)$$

- des moyens de stockage (26) pour stocker lesdits premiers et seconds coefficients synaptiques ($H_j$,$D_j$).

2. Système selon la revendication 1 caractérisé en ce que les seconds moyens (22) comprennent :

- des moyens ($36_1$, $36_2$, 64) pour détecter lorsque les premières combinaisons ont des valeurs ressortissant ou non à ladite partie intermédiaire,
- des moyens (37) pour appliquer, aux premières combinaisons, la partie intermédiaire de l'autre fonction non linéaire lorsque les premières combinaisons ont des valeurs ressortissant à ladite partie intermédiaire, et pour attribuer aux secondes combinaisons des valeurs constantes lorsque les premières combinaisons ont des valeurs ressortissant aux parties extrêmes.

3. Système selon la revendication 2 caractérisé en ce que les moyens (37) comprennent une table qui stocke des valeurs des secondes combinaisons à des adresses constituées par les premières combinaisons.

4. Système selon la revendication 2 caractérisé en ce que l'autre fonction non linéaire est une rampe, les moyens (37) étant constitués par des moyens de transfert (38, 65) qui donnent aux secondes combinaisons des valeurs soit égales soit proportionnelles aux premières combinaisons.

5. Système selon une des revendications 1 à 4 caractérisé en ce qu'il comprend en outre des moyens (75) pour calculer une dérivée de ladite fonction non linéaire.

6. Système selon la revendication 5 caractérisé en ce que les moyens (75) comprennent au moins une autre table qui stocke des valeurs prédéterminées issues d'une application, aux premières combinaisons, d'une dérivée de l'autre fonction non linéaire lorsque les premières combinaisons ont des valeurs ressortissant à ladite partie intermédiaire et qui stocke des valeurs nulles ailleurs.

7. Système selon la revendication 6 caractérisé en ce que l'autre fonction non linéaire est une rampe, l'autre table étant remplacée par un bloc (70) qui met en oeuvre l'application de la dérivée par copie desdits premiers coefficients.

8. Système selon une des revendications 1 à 7 caractérisé en ce que les seconds moyens (22) sont utilisés pour calculer par intervalles des applications selon la fonction non linéaire et des applications selon sa dérivée.

9. Système selon une des revendications 1 à 8 caractérisé en ce que le signal d'entrée est un potentiel neuronal issu d'un réseau de neurones, la fonction non linéaire formée de morceaux étant une approximation d'une fonction non linéaire d'activation neuronale.

10. Système selon la revendication 9 caractérisé en ce que lesdits moyens pour transformer sont obtenus à l'aide d'un autre réseau de neurones programmé.

11. Système selon la revendication 10 caractérisé en ce que des neurones dudit réseau de neurones sont programmés par intervalles pour former l'autre réseau de neurones.

## Patentansprüche

1. Datenverarbeitungssystem mit Mitteln (14) zur Berechnung anahnd eines einen neuronalen Zustand (STAT) darstellenden Eingangssignals, das neuronale Potentiale (POT) darstellt, die der Aktion einer nicht-linearen komplexen Funktion (NLF) zu unterwerfen sind, in ein Ausganssignal (2), unter Verwendung einer geteilten oder segmentierten nicht-linearen Annäherungsfunktion (ANLF) der besagten nicht-linearen Funktion (NLF), mit dem Merkmal, daß die besagten Mittel zur Umwandlung enthalten :

- erste Mittel (20) mit einer neuronalen Einheit zur Berechnung der ersten Kombinationen ($M_1$-$M_n$) des besagten

Eingangssignals mit ersten synaptischen Koeffizienten ($H_j$),

- zweite Mitteln (22) zur Anwendung an den ersten Kombinationen ($M_1$-$M_n$) mindestens einer anderen nicht-linearen Funktion (CNLF) mit einem nicht-konstanten Zwischenteil F(x) und konstanten äußeren Teilen ($F_{max}$,-$F_{min}$) und für die Abgabe zweiter Kombinationen ($S_1$-$S_n$),
- dritte Mitteln (24) mit einer neuronalen Einheit zur Berechnung jedes Teils durch lineare Kombination der zweiten Kombinationen ($S_1$-$S_n$) unter Zuhilfenahme zweiter synaptischer Koeffizienten ($D_j$) und für die Abgabe eines Ausgangssignals

$$(STAT = \sum^{n} D_j S_j + th),$$

- Speichermittel (26) zur Speicherung der besagten ersten und zweiten synaptischen Koeffizienten ($H_j$,$D_j$).

**2.** System laut Anspruch 1, mit dem Merkmal, daß die zweiten Mittel (22) enthalten :

- Mittel ($36_1$, $36_2$, 64) zur Erkennung, wann die ersten Verbindungen Werte haben, die aus dem besagten Zwischenteil herrühren oder nicht,
- Mittel (37) zur Anwendung an den ersten Kombinationen des Zwischenteils der anderen nicht-linearen Funktion, wenn die ersten Kombinationen aus dem ersten Zwischenteil herrührende Werte haben, und um den zweiten Kombinationen konstante Werte zuzuteilen, wenn die ersten Kombinationen aus den äußeren Teilen herrührende Werte haben.

**3.** System laut Anspruch 2, mit dem Merkmal, daß die Mittel (37) eine Tabelle zur Speicherung der Werte der zweiten Kombinationen an aus den ersten Kombinationen gebildeten Adressen haben.

**4.** System laut Anspruch 2, mit dem Merkmal, daß die andere nicht-lineare Funktion eine Rampe ist, die Mittel (37) werden von Transfermitteln (38, 65) gebildet, die den zweiten Kombinationen Werte geben, die entweder gleich oder proportional zu den ersten Kombinationen sind.

**5.** System laut einem der Ansprüche 1 bis 4, mit dem Merkmal, daß es außerdem Mittel (75) zur Berechnung eines Differentials der besagten nicht-linearen Funktion hat.

**6.** System laut Anspruch 5, mit dem Merkmal, daß die Mittel (75) mindestens eine andere Tabelle zum Speichern der vorbestimmten, aus einer Anwendung herrührenden Werte an ersten Kombinationen eines Differentials der anderen nicht-linearen Funktion aufweisen, wenn die ersten Kombinationen aus dem besagten Zwischenteil herrührende Werte aufweisen, die die Werte Null woanders speichert.

**7.** System laut Anspruch 6, mit dem Merkmal, daß die andere nicht-lineare Funktion eine Rampe ist, die andere Tabellee wird von einem Block (70) ausgetauscht, der die Anwendung des Differentials durch Kopie der n ersten Koeffizienten umsetzt.

**8.** System laut einem der Ansprüche 1 bis 7, mit dem Merkmal, daß die zweiten Mittel (22) für die Berechnung in Intervallen der Anwendungen nach der nicht-linearen Funktion und der Anwendungen nach ihrem Differential verwendet werden.

**9.** System laut einem der Ansprüche 1 bis 8, mit dem Merkmal, daß das Eingangssignal ein neuronales Potential ist, herrührend aus einem neuronalen Netz, die geteilte nicht-lineare Funktion ist eine Annäherung einer nicht-linearen neuronalen Aktivierungsfunktion.

**10.** System laut Anspruch 9, mit dem Merkmal, daß die besagten Mittel zur Umwandlung unter Zuhilfenahme eines anderen programmierten neuronalen Netzes erhalten werden.

**11.** System laut Anspruch 10, mit dem Merkmal, daß die Neuronen des besagten Netzes nach Intervallen programmiert sind, um das andere neuronale Netz zu bilden.

## Claims

1. A data processing system, comprising means (14) for calculating on the basis of an input signal representing neural potentials (POT) which are to be subjected to a complex non-linear function (NLF), an output signal representing a neural state (STAT) by means of a segmented (or piecewise) non-linear functions (ANLF) approximating said non-linear function (NLF), characterized in that said means for transformation comprise:

   - first means (20) comprising a neural unit for calculating first combinations $M_1$ - $M_n$ of said input signal with first synaptic coefficients $H_j$,
   - second means (22) for subjecting the firs combinations ($M_1$-$M_n$) to at least one other non-linear function (CNLF) which comprises a non-constant intermediate part F(x) and constant extreme parts ($F_{max}$,-$F_{min}$) and for supplying second combinations ($S_1$ - $S_N$),
   - third means (24) comprising a neural unit for calculating each segment by linear combination of the second segment ($S_1$-$S_n$) by means of second synaptic coefficient ($D_j$) and for delivering the output signal

$$(STAT = \sum^{n} D_j\ S_j + th)$$

   - storage means (26) for storing said first and second synaptic coefficients ($H_j$, $D_j$).

2. A system as claimed in Claim 1, characterized in that the second means (22) comprise:

   - means ($36_1$, $36_2$, 64) for detecting whether the first combinations have values associated with said intermediate part or not,
   - means (37) for applying the intermediate part of the non linear function to the first combinations when the first combinations have values associated with said intermediate part, and for attributing constant values to the second combinations when the first combinations have values associated with the extreme parts.

3. A system as claimed in Claim 2, characterized in that the means (37) comprise a table which stores values of second combinations at addresses formed by the first combinations.

4. A system as claimed in Claim 2, characterized in that the other non-linear function is a ramp, the means (37) being formed by transfer means (38, 65) which impose on the second combinations values which are either equal to or proportional to the first combinations.

5. A system as claimed in any one of the Claims 1 to 4, characterized in that it also comprises means (75) for calculating a derivative of said non-linear function.

6. A system as claimed in Claim 5, characterized in that the means (75) comprise at least one other table which stores predetermined values resulting from an application of a derivate of the other non-linear function to the first combinations when the first combinations have values associated with said intermediate part, and otherwise stores values zero.

7. A system as claimed in Claim 6, characterized in that the other non-linear function is a ramp, the other table being replaced by a block (70) which performs the application of the derivative by copying said first coefficients.

8. A system as claimed in one of the Claims 1 to 7, characterized in that the second means (22) are used for successively calculating applications according to the non-linear function and applications according to its derivative.

9. A system as claimed in one of the Claims 1 to 8, characterized in that the input signal is a neural potential from a neural network, the segmented non-linear function being an approximation of a non-linear neural activation function.

10. A system as claimed in Claim 9, characterized in that said means for transforming are implemented by means of another programmed neural network.

**11.** A system as claimed in Claim 10, characterized in that the neurons of said neural network are successively programmed for forming the other neural network.

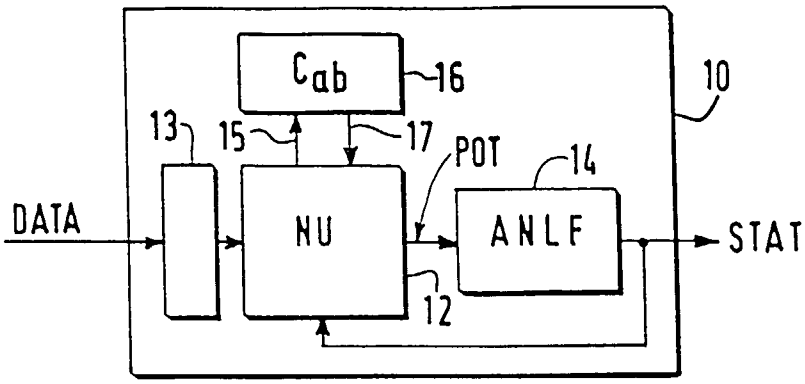


FIG.1

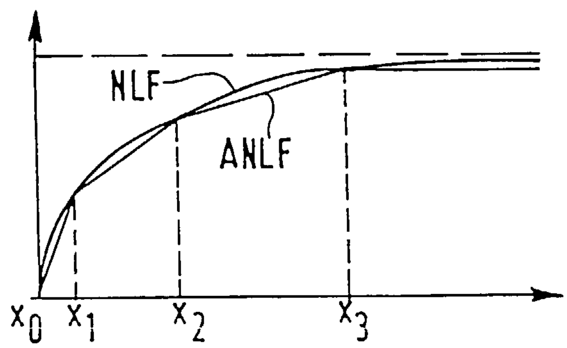


FIG.2

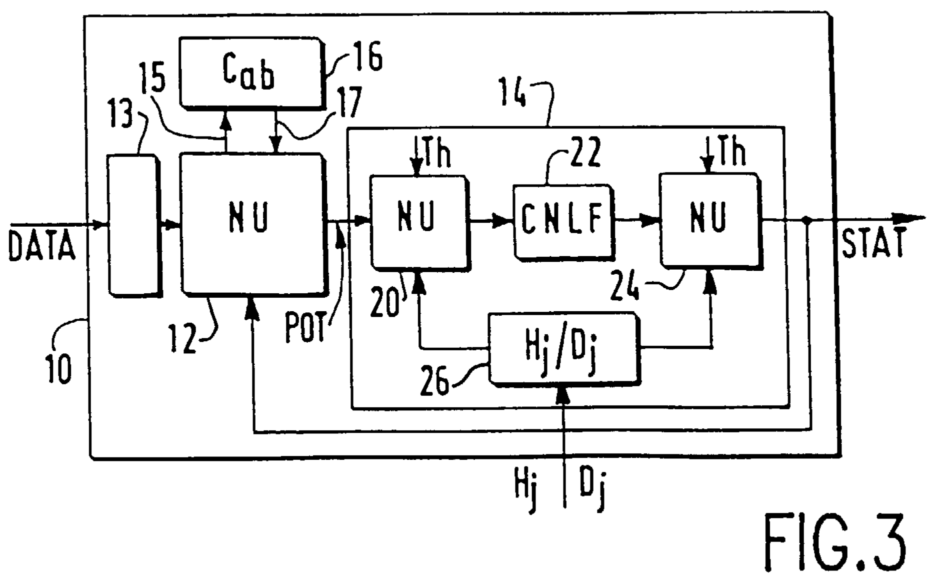


FIG.3

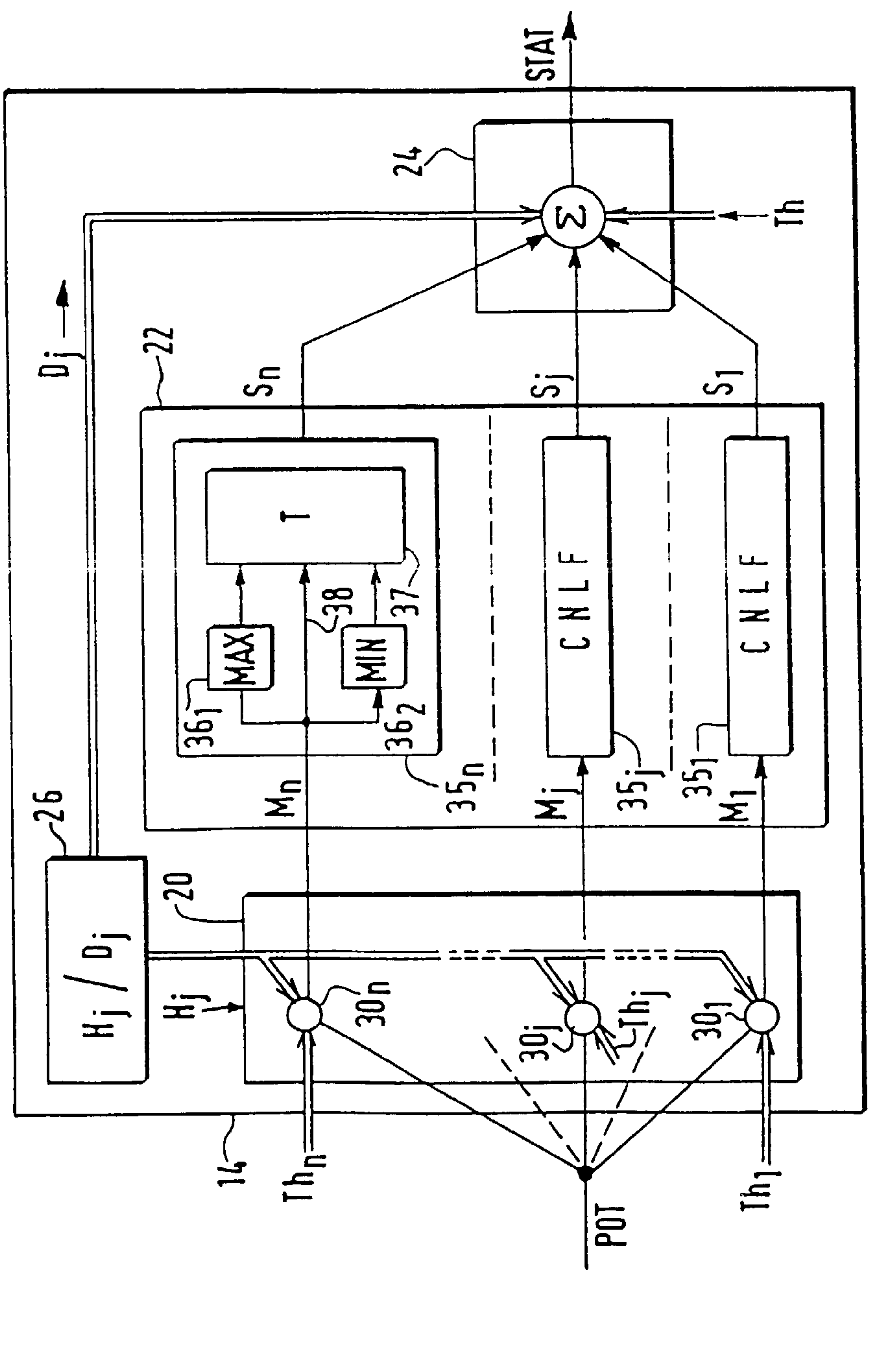
STAT
24
Σ
Th
Dj
22
Sn
Sj
S1
T
MAX
MIN
38
37
36_1
36_2
35_n
C N L F
C N L F
35_j
35_1
26
Hj / Dj
20
Mn
Mj
M1
Hj
30_n
30_j
Th_j
30_1
14
Th_n
POT
Th_1

FIG.4

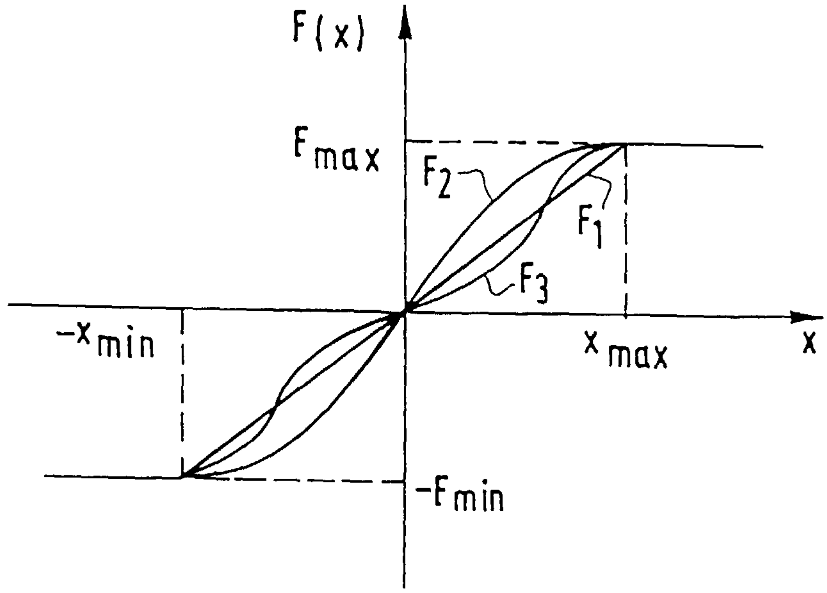
F(x)
Fmax
F2
F1
F3
-xmin
xmax
x
-Fmin

FIG.5

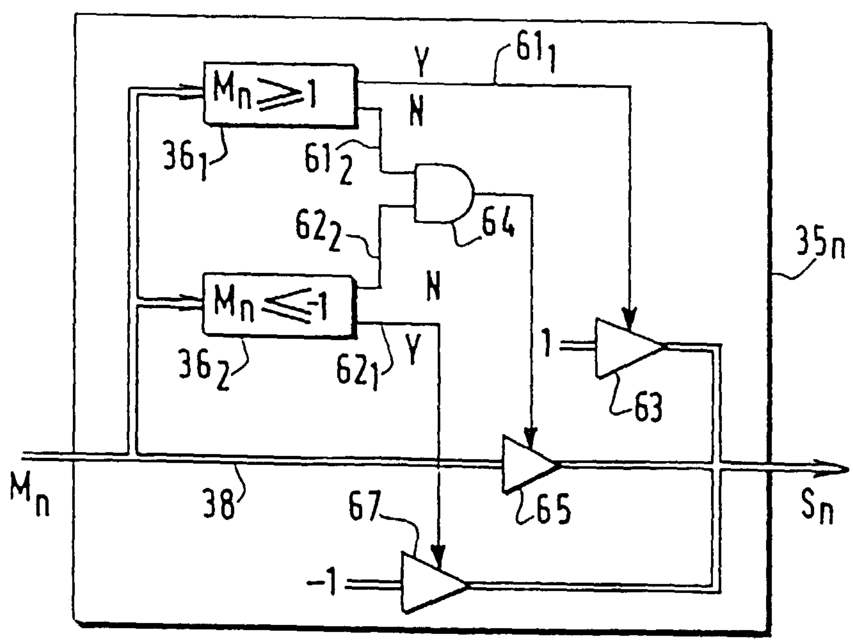
Mn≥1
Y
N
611
361
612
622
64
35n
Mn≤-1
N
362
621
Y
1
63
Mn
38
65
Sn
67
-1

FIG.6

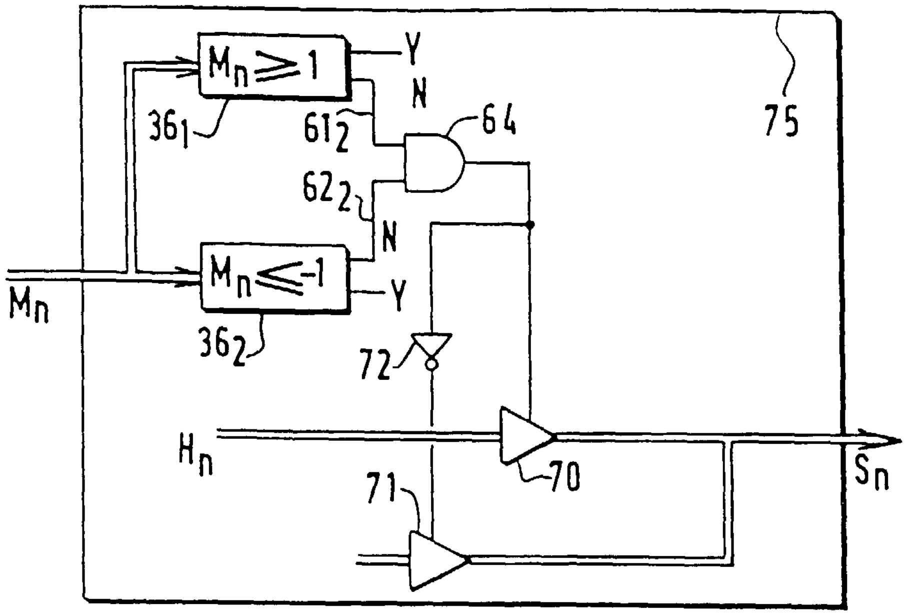
Mn≥1
Y
N
36₁
61₂
64
75
62₂
N
Mn≤-1
Y
Mn
36₂
72
Hn
70
Sn
71

FIG.7

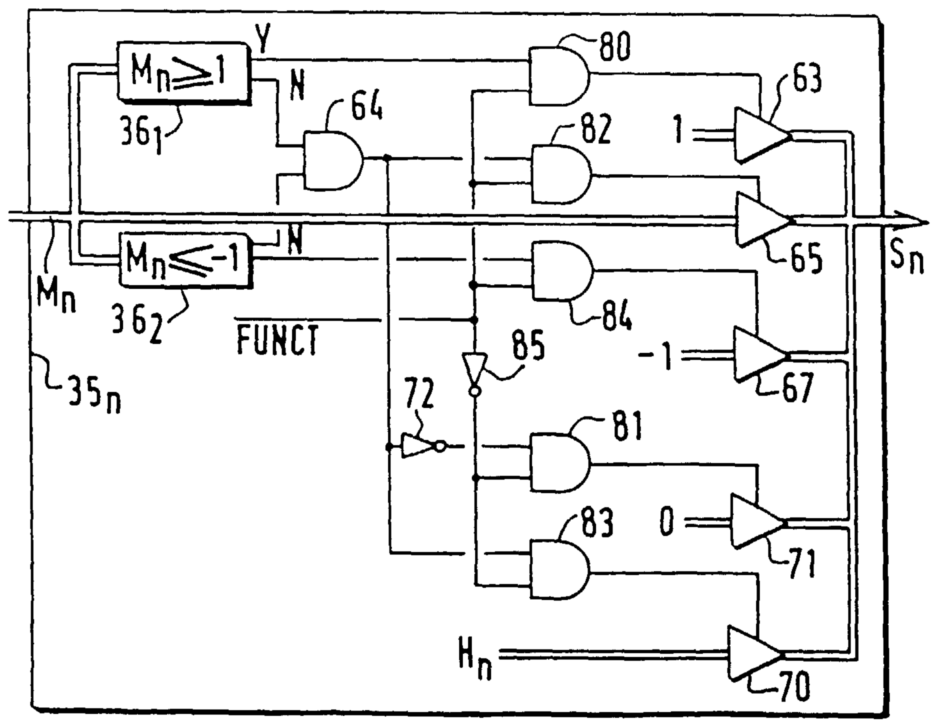
Mn≥1
Y
N
80
36₁
64
63
82
1
65
Sn
Mn≤-1
N
Mn
36₂
84
FUNCT
85
-1
67
35n
72
81
83
0
71
Hn
70

FIG.8

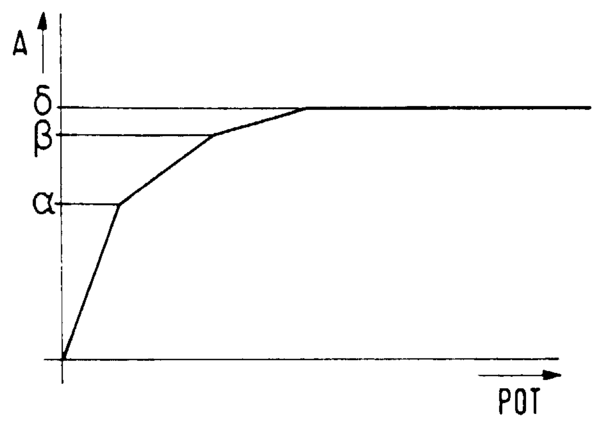


FIG.9

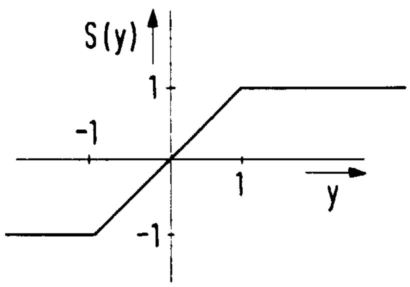


FIG.10

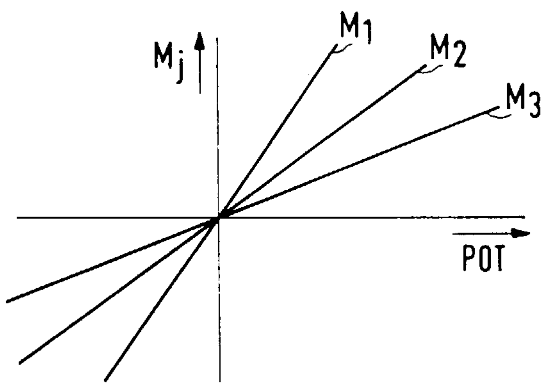


FIG.11

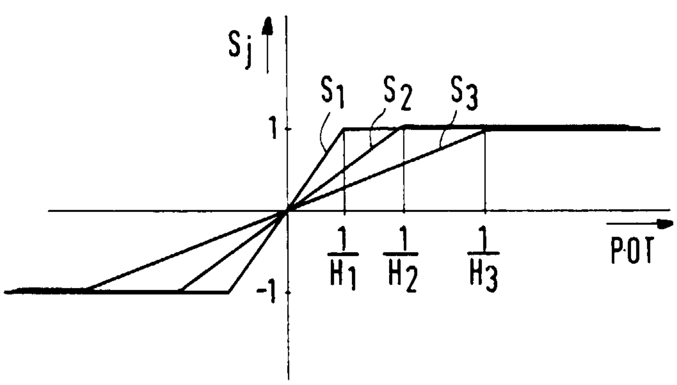


FIG.12